# EUROPEAN PATENT APPLICATION

(11) **EP 4 760 490 A1**
(43) Date of publication of application: **17.06.2026**
(21) Application number: 25214684.0
(22) Date of filing: 10.11.2025
(51) Int. Cl.: G06F 8/65, G06F 21/57

(54) **SYSTEM AND METHOD FOR FACILITATING DIFFERENTIAL SOFTWARE UPDATE ON AN AUTOMOTIVE OPERATING SYSTEM**

(30) Priority: 13.12.2024 US 202418979755
(71) Applicant: Toyota Jidosha Kabushiki Kaisha, Toyota-shi, Aichi-ken 471-8571 (JP)
(72) Inventor: BASTIEN, Jean-François, Tokyo, 103-0022 (JP); MCGARY, Caleb, Tokyo, 103-0022 (JP); CARRE, Marc, Toyota-shi, 471-8571 (JP)
(74) Representative: D Young & Co LLP

(57) **Abstract**

Example embodiments of the present disclosure facilitate differential software update on an automotive operating system (OS). According to embodiments, a method may include: communicating information associated with a software update to the OS, obtaining a portion of the software update, and applying the obtained portion of the software update to a partition of the OS. The partition of the OS may be a first partition that manages a first type of data and/or a second partition that manages a second type of data. The first type of data may include non-malleable data, infrequently changing data, and/or safety-critical data. The second type of data may include malleable data, frequently changing data, and/or non-safety-critical data. The first partition and the second partition may be logical partitions that are enforced by a configuration of the OS.

## Description

### TECHNICAL FIELD

Example embodiments of the present disclosure relate to software updates in a vehicle system, and more particularly, to the facilitating of a differential software update in an operating system (OS) of the vehicle system.

### BACKGROUND

Modem vehicles rely heavily on software for operations like vehicle performance management, safety systems control, navigation, infotainment, and the like. Software updates in the vehicle systems involve installing new or modified software into a vehicle's operating system (OS) to enhance functionality, fix system bugs, improve security, and/or add new features. These software updates may be delivered during vehicle maintenance at a service center or via over-the-air (OTA) using wireless (e.g., cellular) connections.

### SUMMARY

Example embodiments consistent with the present disclosure effectively and efficiently facilitate differential software update on an automotive operating system (OS).

According to example embodiments, a method, performable by a processor, for updating a software in a vehicle system may include: communicating, with a source external to the vehicle system, information associated with a software update to an OS of the vehicle system; obtaining, from the source, a portion of the software update; and applying the obtained portion of the software update to a partition of the OS. The partition of the OS may include at least one of: a first partition that manages a first type of data and a second partition that manages a second type of data. The first type of data may include at least one of: non-malleable data, infrequently changing data, and safety-critical data. The second type of data may include at least one of: malleable data, frequently changing data, and non-safety-critical data. The first partition and the second partition may be logical partitions that are enforced by a configuration of the OS.

According to example embodiments, a device for updating a software in a vehicle system may include a memory storage and a processor. The memory storage may store computer-executable instructions, and the processor may be communicatively coupled to the memory storage and may be configured to execute the instructions to: communicate, with a source external to the vehicle system, information associated with a software update to an OS of the vehicle system; obtain, from the source, a portion of the software update; and apply the obtained portion of the software update to a partition of the OS. The partition of the OS may include at least one of: a first partition that manages a first type of data and a second partition that manages a second type of data. The first type of data may include at least one of: non-malleable data, infrequently changing data, and safety-critical data. The second type of data may include at least one of: malleable data, frequently changing data, and non-safety-critical data. The first partition and the second partition may be logical partitions that are enforced by a configuration of the OS.

According to example embodiments, a non-transitory computer-readable recording medium may have recorded thereon instructions executable by a processor to cause the processor to perform a method to update a software in a vehicle system. The method may include: communicating, with a source external to the vehicle system, information associated with a software update to an OS of the vehicle system; obtaining, from the source, a portion of the software update; and applying the obtained portion of the software update to a partition of the OS. The partition of the OS may include at least one of: a first partition that manages a first type of data and a second partition that manages a second type of data. The first type of data may include at least one of: non-malleable data, infrequently changing data, and safety-critical data. The second type of data may include at least one of: malleable data, frequently changing data, and non-safety-critical data. The first partition and the second partition may be logical partitions that are enforced by a configuration of the OS.

Additional aspects will be set forth in part in the description that follows and, in part, will be apparent from the description, or may be realized by practice of the presented embodiments of the disclosure.

### BRIEF DESCRIPTION OF THE DRAWINGS

Features, advantages, and significance of exemplary embodiments of the disclosure will be described below with reference to the accompanying drawings, in which like reference numerals denote like elements, and wherein:
FIG. 1 illustrates a block diagram of an example system configuration, according to one or more example embodiments;
FIG. 2A to FIG. 2F illustrate block diagram of example operations, according to one or more example embodiments; and
FIG. 3 illustrates a diagram of an example components of a device that may be configured to implement one or more example embodiments.

### DETAILED DESCRIPTION

The following detailed description of exemplary embodiments refers to the accompanying drawings. The foregoing disclosure provides illustration and description but is not intended to be exhaustive or to limit the implementations to the precise form disclosed. Modifications and variations are possible in light of the above disclosure or may be acquired from practice of the implementations. Further, one or more features or components of one embodiment may be incorporated into or combined with another embodiment (or one or more features of another embodiment). Additionally, in the flowcharts and descriptions of operations provided below, it is understood that one or more operations may be omitted, one or more operations may be added, one or more operations may be performed simultaneously (at least in part), and the order of one or more operations may be switched.

Even though particular combinations of features are recited in the claims and/or disclosed in the specification, these combinations are not intended to limit the disclosure of possible implementations. In fact, many of these features may be combined in ways not specifically recited in the claims and/or disclosed in the specification. Although each dependent claim listed below may directly depend on only one claim, the disclosure of possible implementations includes each dependent claim in combination with every other claim in the claim set.

No element, act, or instruction used herein should be construed as critical or essential unless explicitly described as such. Also, as used herein, the articles "a" and "an" are intended to include one or more items, and may be used interchangeably with "one or more." Where only one item is intended, the term "one" or similar language is used. Also, as used herein, the terms "has," "have," "having," "include," "including," or the like are intended to be openended terms. Further, the phrase "based on" is intended to mean "based, at least in part, on" unless explicitly stated otherwise. Furthermore, expressions such as "[A] and/or [B]", "at least one of [A] and [B]" or "at least one of [A] or [B]" are to be understood as including only A, only B, or both A and B.

Expressions such as "at least one processor," where configured to implement a plurality of operations, execute a plurality of instructions, etc., are to be understood as a single processor implementing the plurality of operations, etc., or each of plural processors implementing at least some (but not necessarily all) of the plurality of operations, etc.

Reference throughout this specification to "one embodiment," "an embodiment," "non-limiting exemplary embodiment," or similar language means that a particular feature, structure, or characteristic described in connection with the indicated embodiment is included in at least one embodiment of the present solution. Thus, the phrases "in one embodiment", "in an embodiment," "in one non-limiting exemplary embodiment," "in one or more example embodiments," and similar language throughout this specification may, but do not necessarily, all refer to the same embodiment.

Further, the described features, advantages, and characteristics of the present disclosure may be combined in any suitable manner in one or more example embodiments. One skilled in the relevant art will recognize, in light of the description herein, that the present disclosure can be practiced without one or more of the specific features or advantages of a particular embodiment. In other instances, additional features and advantages may be recognized in certain embodiments that may not be present in all embodiments of the present disclosure.

Furthermore, the term "vehicle" described herein refers to any suitable type of vehicle in which example embodiments of the present disclosure can be implemented. For instance, the "vehicle" may refer to a motorized vehicle such as a car, a truck, a bus, a motorcycle, or any other suitable type of automobile powered by an engine, motor, or other mechanical means. Alternatively or additionally, the "vehicle" described herein may refer to a bicycle, a skateboard, and any other suitable types of non-motorized vehicle, without departing from the scope of the present disclosure.

The installation or application of a software update in an automotive software system of a vehicle (e.g., vehicle OS, application stack, etc.) is critical, since the software update ensures that the software system remains up-to-date with the latest technology advancements, safety-critical updates, and security patches, thereby improving or optimizing the overall performance of the vehicle and enhancing user experience.

In the related art, the updating of the automotive software system requires that the software update be installed in its entirety each time. This necessitates a large amount of communication bandwidth to transmit the software update (or the associated files) to the vehicle, a significant amount of storage to hold the entire software update, and a large amount of time for the software update to be applied. Further, in the related art, the software update cannot be interrupted. If, for example, the software update is interrupted, then the software update has to be restarted from the beginning.

Furthermore, in the related art, the communications between the vehicle system and the source that provides the software update may not be secure. Specifically, the communications before and during obtaining the software update may be exposed to security risks (e.g., the vehicle system may communicate with an untrusted source, the files/data being exchanged may be tampered, etc.). In addition, the downloaded software update may not be authentic and/or complete.

Example embodiments of the present disclosure provide a system, a method, a device, and the like, that effectively reduce the time for software update transmission, reduce the storage required for storing the software update data, and accelerate the application of the software update. Specifically, example embodiments of the present disclosure facilitate a differential software update on the OS in a vehicle system, by partitioning of the OS into multiple partitions and segregating the software update into multiple portions. As a result, software updates on different partitions of the OS may be performed separately and independently, without requiring the transmission of an entire software update, the storage of the entire update, and the installation of the software update in its entirety. Since the software update may be performed by partition, only an associated portion of the software update is required to be transmitted, stored, and applied.

Furthermore, example embodiments of the present disclosure provide a system, a method, a device, and the like, that utilize various security mechanisms that enhance the security of the software update. For instance, the communication between the vehicle system and the source before and during obtaining the software update may be enhanced via security operations like mutual authentication, cryptographic verification, and/or data encryption. In addition, the authenticity and integrity of the downloaded software update may be verified before it is stored and applied to the vehicle system. As a result, the example embodiments may enhance the security of the software update transmission, the storage of the software update, and the application of the software update.

It is contemplated that features, advantages, and significances of example embodiments described herein are merely a portion of the present disclosure, and are not intended to be exhaustive or to limit the scope of the present disclosure. Further descriptions of the features, components, configuration, operations, and implementations of the example embodiments of the present disclosure are provided in the following.

### Example System Configuration

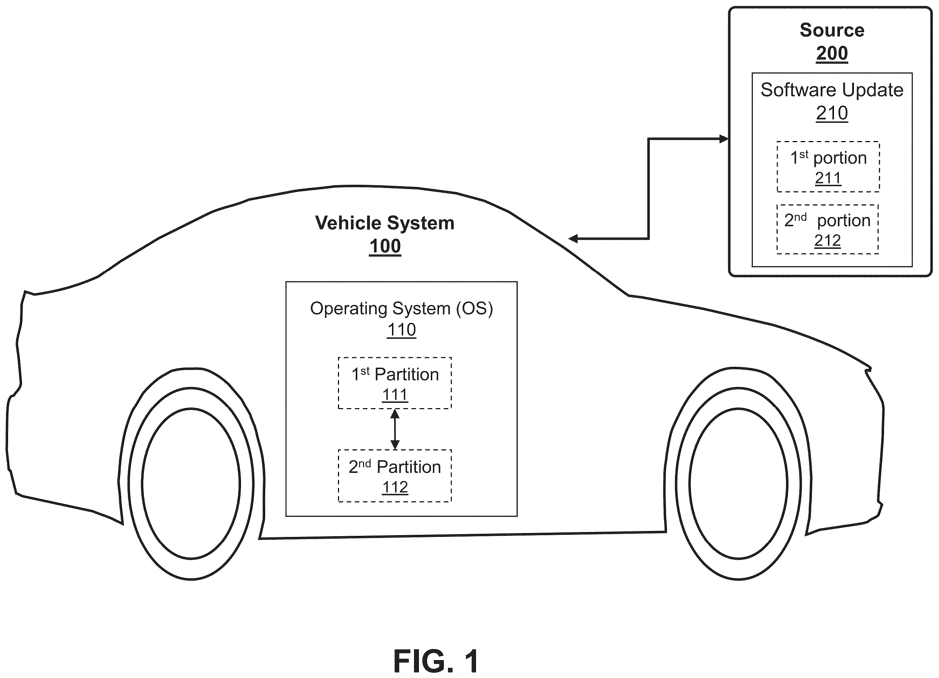

FIG. 1 illustrates a block diagram of an example system configuration, according to one or more example embodiments. As illustrated in FIG. 1, a vehicle system 100 may be implemented in a vehicle and may interact with a source 200 to communicate information associated with a software update 210.

The vehicle system may include an operating system (OS) 110. The OS 110 may be segregated into at least two partitions, i.e., a first partition 111 and a second partition 112. The first partition 111 and second partition 112 may be logical partitions that are enforced by a configuration of the OS 110. This enables software that does not conform to or is not aware of the partitioning mechanism to still perform an update to the OS 110.

In this regard, logical partitions described herein may refer to virtual divisions within the system's resource (e.g., memory, storage, etc.) that are created and managed by the OS 110. These logical partitions may correspond to different functional roles and/or security levels in the system. The configuration of the OS 110 that enforces the logical partitions may include, for example, a file system structure (e.g., type of files/data each partition can store, organization of files/data within each partition, etc.), an access control configuration (e.g., only core system applications can access the first partition 111, only certain type of software update can modify the content in the first partition 111, etc.), and the like.

The first partition 111 may be located at a central location within the vehicle hardware and may be configured to manage a first type of data. The first type of data may include data that does not require updating or is less likely to require an update on a regular basis, such as: non-malleable data, infrequently change data, and/or safety-critical data. As a non-limiting example, the first type of data may include math libraries, localization support data, help files, common operating system components or safety calibration data that is hard tied to the hardware, and the like. The first partition 111 may receive and house safety-critical elements and/or non-malleable elements (or the associated data) of a software update, and may operate in the secure boot. In some example implementations, the first partition 111 may also be referred to as a "Base partition".

The second partition 112 may be located at various locations within the vehicle hardware and may be configured to manage a second type of data. The second type of data may include data that may require frequent updating or is likely to require an update on a regular basis, such as: malleable data, frequently changed data, and/or non-safety-critical data. As a non-limiting example, the second type of data may include infotainment application data, media metadata, and/or any other data associated with non-safety-related functions. According to example embodiments, the second partition 112 may include multiple sub-partitions that share the same characteristics (e.g., non-safety-critical, etc.) and may operate in a distributed fashion in various parts of the vehicle. In some example implementations, the second partition 112 may also be referred to as an "Application partition".

According to example embodiments, each of the first partition 111 and the second partition 112 may comprise a data partition (or may have a data partition associated therewith). The data partition may contain configuration data, calibration data, and/or other non-user data. The first partition 111 and the second partition 112 may include executable codes/libraries which, when being executed (e.g., by a processor associated with the vehicle system 100, etc.), enable the first partition 111 and the second partition 112 to read and manage the data in the associated data partition. In some example implementations, the executable codes may be engineered in such a way that the data can be managed (e.g., updated) without adding safety risk.

In operation, the first partition 111 and the second partition 112 may coordinate and interoperate with each other. According to example embodiments, the second partition 112 may pull capabilities from the first partition 111 (e.g., an application in the second partition may access a math library that resides in the first partition, etc.). In this regard, since the first partition 111 and the second partition 112 are logical partitions that are enforced by the OS 110, potential interoperability issues (that may occur on physical partitions) can be prevented. The dependencies between the first partition 111 and the second partition 112 may be expressed in metadata of an associated continuous integration and continuous delivery (CI/CD) system, and may be tested and enforced at installation and boot time. In some example embodiments, the dependencies between the partitions may be included in a Software Bill of Materials (SBOM), which is a unique structured list of software and associated materials for the vehicle.

The determination, identification, or definition of malleable data and non-malleable data may be performed by, for example, the vehicle manufacturer based on analysis of historical data (e.g., software installed on similar vehicle models in the past, etc.). According to example embodiments, when a software is installed in the vehicle (e.g., installed on an electronic control unit (ECU), OS, etc.), an image of the installed software may be created and the associated files may be hashed and have the associated timestamp recorded. Accordingly, available updates (e.g., updates available for the ECU, the OS, etc.) may be applied or installed in order to the image. After an update is applied, the associated files/data may be hashed and compared again with the originally installed software to determine and record the files/data that have changed/updated (e.g., the delta). After the application of the updates, it may be possible to determine which files/data did not change ever, which files/data changed on a rare basis, and which files/data were modified frequently. Such information may be utilized to determine or define malleable data and non-malleable data.

Referring still to FIG. 1, the vehicle system 100 may interact with the source 200 to communicate information associated with a software update available to or associated with the OS 110. The source 200 may include, for example, a device (e.g., a server) of the vehicle manufacturer or original equipment manufacturer (OEM) (that may provide software updates for core applications and safety-critical features), a device (e.g., a server) of a third-party service provider (e.g., provider of an infotainment application, etc.), a device (e.g., a server) of an authorized service center, and the like. The communication between the vehicle system 100 and the source 200 may be performed via over-the-air (OTA) through wireless connections, such as cellular network connections (e.g., 5G, LTE, etc.), Wi-Fi connections, satellite connections, roadside infrastructure (e.g., vehicle-to-infrastructure (V2I), etc.) communications, and the like.

According to example embodiments, the source 200 may broadcast a beacon to announce to the associated vehicles regarding an available software update. In some example implementations, the beacon may include information indicative that a software update is available. In that case, upon detecting the beacon, the vehicle system 100 may communicate with the source 200 (e.g., via initiating a handshake procedure, etc.) to obtain the details of the available software update. Alternatively, the beacon may include detailed information of the available software update, such as: the type of the software update (e.g., safety-critical, optional, etc.), the file size and version number of the software update, portion information (e.g., which portion of the software update contains malleable/non-malleable data, etc.), the target application (e.g., ADAS application, navigation application, etc.) on which the software update should be applied, and the like. In this case, upon detecting the beacon, the vehicle system 100 may evaluate whether or not the available software update is required in the OS 110 and then initiate the communication with the source 200 when required.

Alternatively or additionally, the vehicle system 100 may actively query the source 200 for software updates based on one or more predefined conditions, such as a time-based condition, an event-based condition, a system health-based condition, and the like. For instance, the vehicle system 100 may initiate a query to the source 200 when the vehicle system 100 detects from a timer that a predefined amount of time has elapsed since a previous software update, when the vehicle system 100 detects from navigation information that the vehicle crosses a geographical boundary, when the vehicle system 100 detects from a system clock that a daylight savings time (DTS) has taken effect, when the vehicle system 100 detects from a fuel counter that the vehicle has been refueled a specific number of times, when the vehicle system 100 detects from a battery sensor that a vehicle battery has degraded a certain level, when the vehicle system 100 detects from an odometer that the vehicle's mileage exceeds a certain threshold, and the like. According to example embodiments, the conditions for triggering the query of the software update may be included in a list, and the vehicle system 100 may periodically monitor the vehicle and initiate the query for the software update when one or more of the conditions in the list are detected. According to example embodiments, each software or application installed in the OS 110 may have a dedicated triggering condition (i.e., the vehicle system 100 may initiate the software update query for different applications when different conditions are detected.).

Upon sending the query to the source 200, if the vehicle system 100 receives a response indicative that no software update is available, the vehicle system 100 may reset the associated triggering condition (e.g., reset the timer that indicates the elapsed time since the last update, reset the fuel counter, etc.). On the other hand, based on determining that a software update is available, the vehicle system 100 may communicate with the source 200 to obtain the software update.

Before obtaining or downloading the software update from the source 200, the vehicle system 100 may initiate a handshake session with the source 200, during which the vehicle system 100 and the source 200 may perform one or more operations to authenticate and verify each other. According to example embodiments, the vehicle system 100 and the source 200 may perform a mutual authentication to ensure that both parties are trusted, the data is authentic, and the communication is secure. For instance, the vehicle system 100 may provide its identity credentials (e.g., a digital certificate that contains a public key or other identifying information) to the source 200. Similarly, the source 200 may provide its identity credentials (e.g., a digital certificate that contains a public key or other identifying information) to the vehicle system 100. Accordingly, the vehicle system 100 and the source 200 may verify each other's identity (e.g., by checking the received certificate against a trusted Certificate Authority (CA) that issued the certificates, by using public key cryptography such as checking the received certificate against a list of known certificates, etc.).

According to example embodiments, during the mutual authentication, the vehicle system 100 may provide, to the source 200, a unique identification of the vehicle. The unique identification may include a vehicle identification number (VIN), and/or a unique combination of a SBOM and an associated hash. The SBOM and the hash may be generated in the vehicle system 100 upon successful attestation of several vehicle components (e.g., attestation of secure boot of multiple ECUs via shortest path algorithm, etc.). Accordingly, the vehicle system 100 may provide a unique identity of the vehicle regardless of geographical location or VIN format of the vehicle.

According to example embodiments, upon successful mutual authentication, the vehicle system 100 and the source 200 may utilize public key cryptography to verify or validate the integrity and authenticity of each other and the data exchange therebetween. For instance, the source 200 may sign a data using its private key and then provide the signed data to the vehicle system 100. Accordingly, the vehicle system 100 may use the source's public key (obtained during the mutual authentication) to verify the signed data (e.g., the vehicle system 100 may decrypt the signed data with the source's public key, etc.). Similarly, the vehicle system 100 may sign a data using its private key and then provide the signed data to the source 200, and the source 200 may verify the signed data using the vehicle system's public key (obtained during the mutual authentication).

According to example embodiments, the cryptographic-related operations may be performed in software and/or hardware. Software-based cryptographic operations are implemented and executed using algorithms in a software, and the cryptographic functions (e.g., encryption, description, signing, etc.) may be executed in general-purpose components (e.g., CPU, etc.). On the other hand, hardware-based cryptographic operations are implemented and executed using hardware components dedicated to handle security-related tasks (e.g., a hardware component that implements a trusted execution environment (TEE), etc.). The location for performing the cryptographic operations may be dynamically selected based on, for example, the cryptographic algorithm (e.g., complexity, security, library support, hardware support, etc.), size of data to encrypt/decrypt, and safety impact (e.g., maximum execution time, etc.). In this way, the vehicle system 100 may dynamically choose an optimal location for performing the cryptographic location.

Upon successful mutual authentication (and successful cryptographic verification, in some embodiments), a secure communication channel may be established between the vehicle system 100 and the source 200. At this stage, the vehicle system 100 and the source 200 may securely communicate and exchange data with each other. For instance, the vehicle system 100 may provide a current version of a software installed therein to the source 200, and the source 200 may confirm that a software update is available for the vehicle system 100. In some example embodiments, the vehicle system 100 and the source 200 may optionally encrypt the data transmission in the secure communication channel (via advanced encryption standard (AES) encryption, etc.) to further enhance the security of the communication among the vehicle system 100 and the source 200.

According to example embodiments, the vehicle system 100 and the source 200 may exchange a list of files and synchronize the necessary information/data, by performing an rsync-like operation. In this regard, an rsync-like operation described herein may refer to an operation for synchronizing data between two systems (e.g., the vehicle system 100 and the source 200) by comparing files/data in the two systems and transferring only the files or data that are different. In some example embodiments, advanced data structures and algorithms may be utilized by the vehicle system 100 and/or the source 200 to efficiently manage large volumes of data during file/data synchronization. Some non-limiting examples of advanced data structures are: a rolling hash that enables quick identification of changes between files/data, a Bloom filter that enables quick determination of the presence or absence of files/data, and a Merkle tree that enables efficient identification of differences of data at different levels (e.g., root level, branch level, etc.).

Upon completing the file exchange and synchronization, the vehicle system 100 may obtain the software update (or the associated data) from the source 200. According to example embodiments, the source 200 may broadcast the software update to the vehicle system 100. Additionally or alternatively, the vehicle system 100 may obtain the software update via, for example, performing direct download from a server associated with the source 200, performing peer-to-peer (P2P) download from other vehicles or devices that already obtained the required software update, performing download from a content delivery network (CDN), or a combination thereof. According to example embodiments, the software update (or the data associated therewith) may contains signature that can be verified or validated by the vehicle system 100. For instance, in the case of P2P file sharing, the software update may be distributed in the form of multiple pieces or torrent blocks (via torrent packetization, etc.). In this case, each torrent block or packet within the torrent may be signed (with public key of the source 200, etc.), and the vehicle system 100 may verify or validate the torrent block/packet (with the public key of the source 200 obtained during the mutual authentication, etc.) to ensure the downloaded data is not corrupted or being tampered.

According to example embodiments, the application of the software update (may also be referred to as "software install" herein) may be segregated into at least two portions, each of which may be performed to a segregated partition in the OS 110. For instance, as illustrated in FIG. 1, the software update 210 may be segregated into a first portion 211 and a second portion 212. In this regard, the first portion 211 may include non-malleable data, infrequently changing data, and/or safety-critical data that may be installed or applied to the first partition 111 of the OS 110, and the second portion 212 may include malleable data, frequently changing data, and/or non-safety-critical data that may be installed or applied to the second partition 112 of the OS 110. Further descriptions of the examples and characteristics of the data have been described above with reference to the first partition 111 and the second partition 112, thus redundant descriptions associated therewith may be omitted below for conciseness.

According to example embodiments, the vehicle system 100 may only obtain the required portion of software update (e.g., first portion 211, second portion 212, etc.) from the source 200, instead of downloading the entire software update 210. For instance, the vehicle system 100 may determine that a software update in the second partition 112 is required, and may thus obtain only the second portion 212 of the software update from the source 200.

Upon obtaining the software update from the source 200, the vehicle system 100 may store the obtained software update in, for example, a cache or a non-volatile storage, such that the vehicle system 100 may apply the software update in the associated partition(s) at a later time. According to example embodiments, the vehicle system 100 may perform integrity and authenticity verification on the obtained software update, before storing or applying the obtained software update. For instance, the software update may be signed by the source 200, and the vehicle system 100 may use the public key of the source 200 (obtained via mutual authentication) to validate the digital signature in the software update, thereby ensuring that the software update is provided by the source 200 and was not altered during transmission. As another example, the vehicle system 100 may perform an integrity check by verifying the hash or checksum of the software update, thereby ensuring that the required portion of the software update was downloaded correctly and no parts are missing or corrupted.

According to example embodiments, the installation or application of the software update may be triggered automatically. For instance, upon obtaining the software update (or the required portion thereof), the vehicle system 100 may set a timer such that the software update may be automatically installed or applied after an amount of time has elapsed. As another example, the vehicle system 100 may construct a schedule based on, for example, a preference or habit of the driver, such that the installation or application of the software update may be automatically performed when the vehicle is not in use. Additionally or alternatively, the installation or application of the software update may be manually triggered by a vehicle user (e.g., driver, passenger, etc.). For instance, when a software update is ready to be installed or applied, the vehicle system 100 may notify the vehicle user via, for example, outputting a notification regarding the software update (e.g., displaying the notification on the infotainment system, etc.). Accordingly, the vehicle system 100 may install or apply the software update upon receiving an approval from the vehicle user. In some example embodiments, the installation or application of the software update (e.g., downloading, installing, and checking of the update files, etc.) can be performed in the background while the vehicle is operational or in use. For instance, upon obtaining the software update (or the required portion/data thereof), the vehicle system 100 may determine whether the vehicle or the vehicle system 100 has sufficient resources (e.g., memory, computing power, etc.) to install or apply at least a portion of the software update in the background without affecting the performance of the vehicle. Accordingly, based on determining that the vehicle/vehicle system 100 has sufficient resources to install or apply the software update in the background, the vehicle system 100 may automatically install or apply the software update in the background. On the other hand, based on determining that the vehicle/vehicle system 100 does not have sufficient resources to install or apply the software update in the background, the vehicle system 100 may install or apply the software update at a later time (e.g., when the vehicle is not in use, when the vehicle has sufficient resources to install or apply the software update in the background, etc.).

It is contemplated that the configuration in FIG. 1 and the associated features described hereinabove, are merely examples of possible embodiments, and the scope of the present disclosure should not be limited thereto. Specifically, the system may include more/fewer components than as described and/or may be configured in a different manner, without departing from the scope of the present disclosure. For instance, in some example embodiments, the vehicle system 100 may communicate with multiple sources 200, the source 200 may include multiple software updates 210, the portion of the software update 210 may be further segregated into multiple sub-portions, and the like.

According to example embodiments, the OS 110 may include a third partition that is logically separated (and physically separated, when applicable) from other partitions of the OS 110. This third partition may be configured to manage or store high privacy data, such as: user profile data, application logs, data collected by the vehicle (e.g., sensor data around the time of an ADAS disengagement for further analysis and continuous improvement, etc.), and the like. Since these data may have special requirements from a privacy perspective, any software update should not access this third partition or modify the data therein, but could only modify the data on a generic data partition. Further, the data in this third partition should be easily erasable, and shall be applied with additional security mechanisms (when applicable). Thus, managing these data in a logically separated (and physically separated, when applicable) partition may enable ease of erasure and provide additional enhancement to data security.

To this end, example embodiments of the present disclosure provide a system that effectively facilitates the differential software update on the OS in a vehicle system. Specifically, the partitioning of the OS and the segregation of the software update enable differential software updating of any of the partitions of the OS. For instance, software updates on different partitions of the OS may be performed separately and independently, without requiring the transmission of an entire software update, the storage of the entire update, and the installation of the software update in its entirety. Conversely, since the software update may be performed by partition, only an associated portion of the software update is required to be transmitted, stored, and applied. As a result, the system of the example embodiments may effectively reduce the time for software update transmission, reduce the storage required for storing the software update data, and accelerate the application of the software update.

Furthermore, example embodiments of the present disclosure also provide a system that utilizes various security mechanisms that enhance the security of the software update. For instance, the communication between the vehicle system and the source before and during obtaining the software update may be enhanced via security operations like mutual authentication, cryptographic verification, and/or data encryption. In addition, the authenticity and integrity of the downloaded software update may be verified before it is stored and applied to the vehicle system. As a result, the system of the example embodiments may enhance the security of the software update transmission, the storage of the software update, and the application of the software update.

### Example Operations

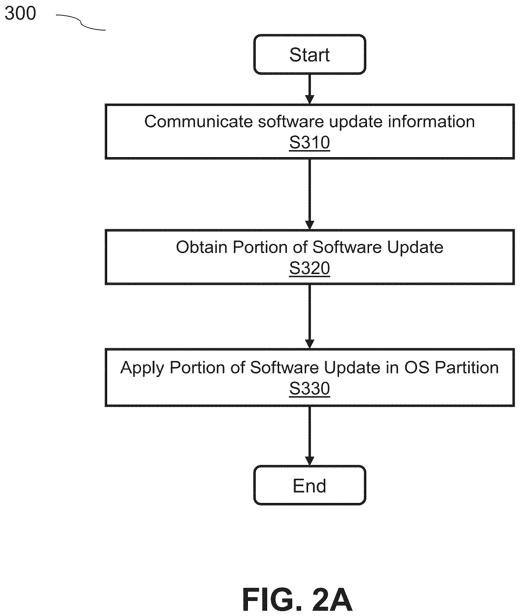

As described above, various operations may be performed by the vehicle system 100 and the source 200 to facilitate differential software updates and enhance the security of the software update. Several example operations, according to one or more example embodiments, are described in the following with reference to FIGs. 2A to 2F. One or more operations (or the data involved therein) may be similar to those described above with reference to FIG. 1, thus it may be understood that the described operation(s)/data may be similarly applied to the operations in FIGs. 2A to 2F (unless described otherwise) and redundant descriptions associated therewith may be omitted for conciseness.

For descriptive purposes, the operations are mainly described as being performed by the vehicle system 100, although it can be understood that, in actual implementations, the source 200 may perform similar/related operations from the opposite side, without departing from the scope of the present disclosure. For instance, an operation of the vehicle system 100 receiving a data from the source 200 may indicate or suggest an operation of the source 200 sending the data to the vehicle system 100, an operation of the vehicle system 100 verifying the source 200 may indicate or suggest a similar operation where the source 200 verifying the vehicle system 100, and the like.

According to example embodiments, the vehicle system 100 may include (or may be implemented in) one or more hardware components, and one or more operations described hereinbelow may be performed by the one or more hardware components of the vehicle system 100. For instance, the vehicle system 100 may include (or may be implemented in) a processor and a memory storage (or any other suitable storage mediums), wherein the memory storage may include computer-executable instructions which, when being executed by the processor, cause the processor to perform one or more operations described herein.

FIG. 2A illustrates a block diagram of an example method 300 for facilitating a differential software update, according to one or more example embodiments.

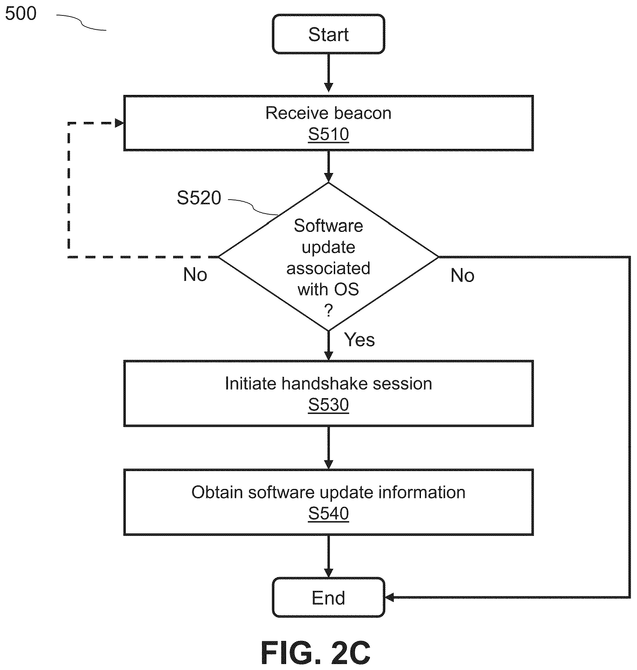

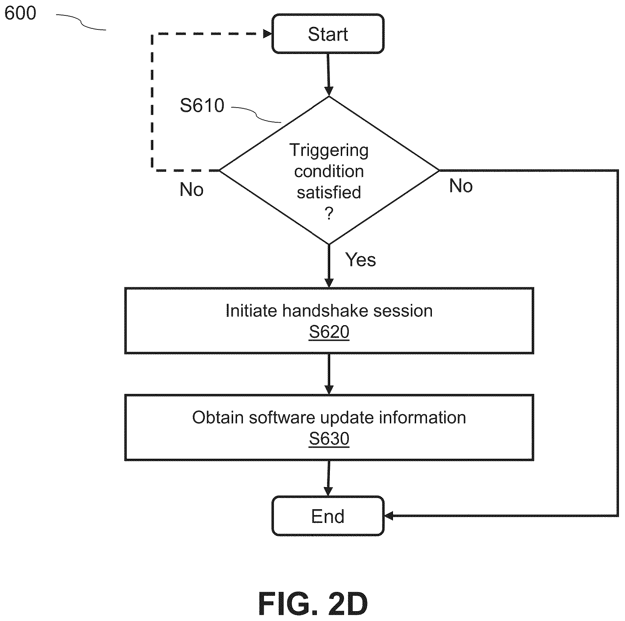

At operation 310, the vehicle system 100 (or the associated processor) may be configured to communicate, with a source external to the vehicle system 100 (e.g., source 200), information associated with a software update of an OS of the vehicle system (e.g., OS 110). Example operations for communicating the information associated with the software update are described below with reference to FIGs. 2C and 2D.

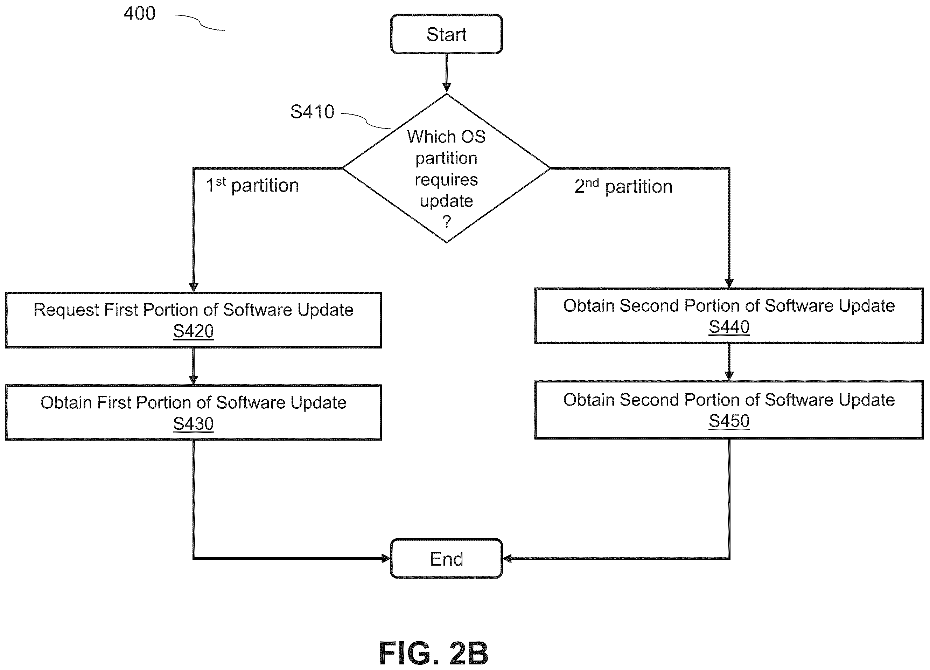

Upon communicating the information associated with the software update, at operation S320, the vehicle system 100 (or the associated processor) may be configured to obtain, from the source, a portion of the software update. Example operations for obtaining the portion of the software update are described below with reference to FIGs. 2B.

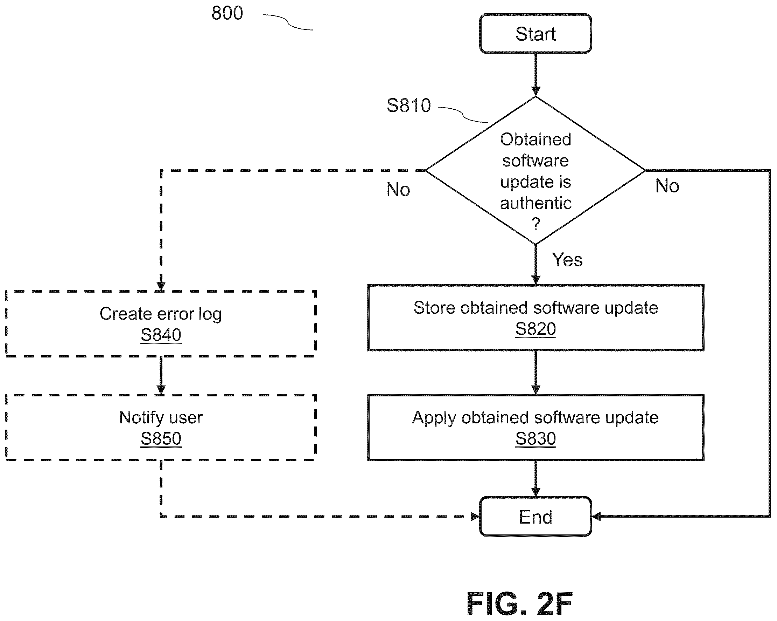

Upon obtaining the portion of the software update, at operation S330, the vehicle system 100 (or the associated processor) may be configured to apply the obtained portion of the software update to a partition of the OS. As described above with reference to FIG. 1, the partition of the OS may include at least one of: a first partition (e.g., partition 111) that manages a first type of data and a second partition (e.g., partition 112) that manages a second type of data. The first type of data may include at least one of: non-malleable data, infrequently changing data, and safety-critical data, while the second type of data may include at least one of: malleable data, frequently changing data, and non-safety-critical data. Further, the first partition and the second partition may be logical partitions that are enforced by a configuration of the OS. Example operations for obtaining the portion of the software update are described below with reference to FIGs. 2F.

FIG. 2B illustrates a block diagram of an example method 400 for obtaining a portion of the software update from the source, according to one or more example embodiments. One or more operations in FIG. 2B may be part of operation S320 in FIG. 2A.

As illustrated in FIG. 2B, at operation S410, the vehicle system 100 (or the associated processor) may be configured to determine which partition of the OS (e.g., which of the first partition and the second partition) requires the software update.

Accordingly, based on determining that the first partition of the OS requires the software update, the method 400 may proceed to operations S420 and S430. Otherwise, based on determining that the second partition of the OS requires the software update, the method 400 may proceed to operations S440 and S450.

At operations S420, the vehicle system 100 (or the associated processor) may be configured to output, to the resource, a request for a portion of the software update (e.g., first portion 211) that associated with the first type of data (that is managed by the first partition). Subsequently, at operation S430, the vehicle system 100 (or the associated processor) may be configured to obtain, from the source, the requested portion of the software update.

Similarly, at operation S440, the vehicle system 100 (or the associated processor) may be configured to output, to the resource, a request for a portion of the software update (e.g., second portion 212) that associates with the second type of data (that is managed by the second partition). Subsequently, at operation S450, the vehicle system 100 (or the associated processor) may be configured to obtain, from the source, the requested portion of the software update.

FIG. 2C and FIG. 2D each illustrates a block diagram of an example method for communicating information associated with a software update, according to one or more example embodiments. One or more operations in FIG. 2C and FIG. 2D may be part of operation S310 in FIG. 2A.

Referring first to FIG. 2C, which illustrates a block diagram of an example method 500 for passively obtaining information associated with the software update, according to one or more example embodiments.

At operation S510, the vehicle system 100 (or the associated processor) may be configured to receive, from the source, a beacon indicating that the software update is available. Accordingly, at operation S520, the vehicle system 100 (or the associated processor) may be configured to determine whether the software update is associated with the OS (e.g., whether the software update or a portion thereof can be applied to a partition of the OS, etc.).

Based on determining that the software update is not associated with the OS, the method 500 may be ended. Alternatively, the method 500 may return to operation S510, such that the vehicle system 100 (or the associated processor) may continuously (or repeatedly) perform method 500 for at least a predetermined period of time.

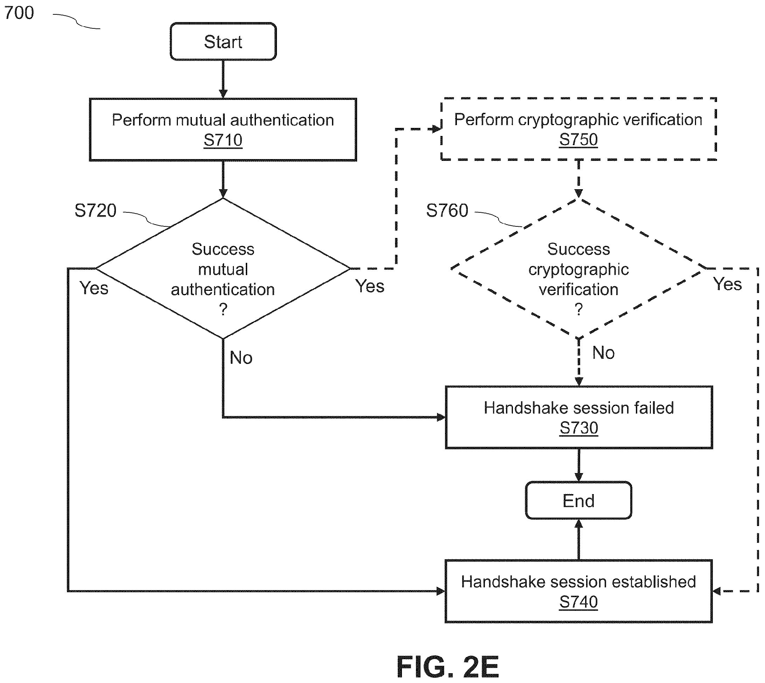

On the other hand, based on determining that the software update is associated with the OS, the method 500 may proceed to operation S530, in which the vehicle system 100 (or the associated processor) may be configured to initiate a handshake session with the source. Example operations for initiating a handshake session are described below with reference to FIG. 2E.

Upon successfully initiating the handshake session, the method 500 may proceed to operation S540, in which the vehicle system 100 (or the associated processor) may be configured to obtain, from the source, information associated with the software update.

Referring next to FIG. 2D, which illustrates a block diagram of an example method 600 for actively obtaining information associated with the software update, according to one or more example embodiments.

At operation S610, the vehicle system 100 (or the associated processor) may be configured to determine whether a triggering condition for querying a software update is satisfied. According to example embodiments, the triggering condition may include at least one of: a time-based condition, an event-based condition, and a system-health-based condition.

Based on determining that the triggering condition is not satisfied, the method 600 may be ended. Alternatively, the vehicle system 100 (or the associated processor) may continuously (or repeatedly) perform method 600 for at least a predetermined period of time.

On the other hand, based on determining that the triggering condition is satisfied, the method 600 may proceed to operation S620, in which the vehicle system 100 (or the associated processor) may be configured to initiate a handshake session with the source. Example operations for initiating a handshake session are described below with reference to FIG. 2E.

Upon successfully initiating the handshake session, the method 600 may proceed to operation S630, in which the vehicle system 100 (or the associated processor) may be configured to obtain, from the source, information associated with the software update.

FIG. 2E illustrates a block diagram of an example method 700 for initiating a handshake session, according to one or more example embodiments. One or more operations in FIG. 2E may be part of operation S530 in FIG. 2C or operation S620 in FIG. 2D.

At operation S710, the vehicle system 100 (or the associated processor) may be configured to perform a mutual authentication with the source. Accordingly, the method 700 may proceed to operation S720, in which the vehicle system 100 (or the associated processor) may determine whether the mutual authentication is successful. Based on determining that the mutual authentication is not successful, the method 700 may proceed to operation S730, in which the vehicle system 100 (or the associated processor) may determine that the handshake session failed to establish.

On the other hand, based on determining that the mutual authentication is successful, the method 700 may proceed to operation S740, in which the vehicle system 100 (or the associated processor) may determine that the handshake session is successfully established.

Alternatively, based on determining that the mutual authentication is successful, the method 700 may proceed to operation S750, in which the vehicle system 100 (or the associated processor) may be configured to perform a cryptographic verification on the source. Accordingly, at operation S760, the vehicle system 100 (or the associated processor) may determine whether the cryptographic verification is successful or failed. Based on determining that the cryptographic verification is successful, the method 700 may proceed to operation S740, at which the vehicle system 100 (or the associated processor) may determine that the handshake session is successfully established. Otherwise, based on determining that the cryptographic verification has failed, the method 700 may proceed to operation S730, at which the vehicle system 100 (or the associated processor) may determine that the handshake session has failed to establish.

According to example embodiments, upon determining that the handshake session is successfully established, the vehicle system 100 (or the associated processor) may be configured to encrypt the data or message that the vehicle system 100 transmits to the source.

FIG. 2F illustrates a block diagram of an example method 800 for applying a software update, according to one or more example embodiments. One or more operations in FIG. 2F may be part of operation S330 in FIG. 2A.

At operation S810, the vehicle system 100 (or the associated processor) may be configured to verify an authenticity of the obtained software update (e.g., the portion of software update obtained at operation S320). As described above with reference to FIG. 1, the vehicle system 100 (or the associated processor) may utilize a public key of the source to verify whether the obtained software update is authentic.

Based on determining that the obtained software update is authentic, the method 800 may proceed to operation S820, in which the vehicle system 100 (or the associated processor) may be configured to store the obtained software update in a cache (or a non-volatile memory) for at least a predetermined amount of time.

Subsequently, at operation S830, the vehicle system 100 (or the associated processor) may be configured to apply the obtained software update (e.g., the portion of software update obtained at operation S320 and stored at operation S820) to the associated partition of the OS. According to example embodiments, based on verifying that the obtained software update is authentic, the vehicle system 100 (or the associated processor) may set a timing (e.g., start a timer, construct a schedule, etc.) for applying the software update. In this case, based on determining that the set timing has elapsed, vehicle system 100 (or the associated processor) may automatically apply the obtained software update to the associated partition of the OS. Alternatively, based on verifying that the obtained software update is authentic, the vehicle system 100 (or the associated processor) may output a notification regarding the software update, receive a user approval for applying the software update, and then apply the obtained software update to the associated partition of the OS. According to example embodiments, the vehicle system 100 (or the associated processor) may be configured to apply the obtained software update (e.g., the portion of software update obtained at operation S320 and stored at operation S820) in the background while the vehicle is operational or in use. For instance, the vehicle system 100 (or the associated processor) may be configured to determine whether the vehicle system 100 has sufficient resources to apply the obtained software update in the background while the vehicle system 100 is operational or in use. Accordingly, based on determining that the vehicle system 100 has sufficient resources to apply the obtained software update in the background, the vehicle system 100 (or the associated processor) may be configured to apply the obtained software update to the associated partition of the OS while the vehicle system is operational or in use.

On the other hand, based on determining that the obtained software update is not authentic, the method 800 may be ended and the obtained software update would not be stored in the vehicle system or applied to the OS. Alternatively, the method 800 may proceed to operation S840, in which the vehicle system 100 (or the associated processor) may create an error log (or an event record) that includes detailed information of the incident (e.g., information of the rejected software update, reason of failure, information of the source, etc.). Subsequently, at operation S850, the vehicle system 100 (or the associated processor) may notify the associated user (e.g., present an update failure notification to the driver via the infotainment system, transmit the error log to the vehicle manufacturer, etc.). Additionally, the error log information may be sent by the vehicle system to the user's dealer or service center to offer services and remediation to the user. Separately, the vehicle system may send error log information to the vehicle manufacturer or supplier to enable continuous improvement.

To this end, example embodiments of the present disclosure provide a method that effectively facilitates the differential software update on the OS in a vehicle system. Specifically, the method includes operations that leverage the partitioning of the OS and the segregation of the software update, such as obtaining a portion of the software update, applying the portion of the software update to a partition of the OS, and the like. Accordingly, the method of example embodiments may perform software updates on different partitions of the OS separately and independently, without requiring the transmission of an entire software update, the storage of the entire update, and the installation of the software update in its entirety. Conversely, since the software update may be performed by partition, only an associated portion of the software update is required to be transmitted, stored, and applied. As a result, the method of the example embodiments may effectively reduce the time for software update transmission, reduce the storage required for storing the software update data, and accelerate the application of the software update.

Furthermore, example embodiments of the present disclosure also provide a method that involves various security mechanisms that enhance the security of the software update. For instance, the communication between the vehicle system and the source before and during obtaining the software update may be enhanced via security operations like mutual authentication, cryptographic verification, and/or data encryption. In addition, the authenticity and integrity of the downloaded software update may be verified before it is stored and applied to the vehicle system. As a result, the method of the example embodiments may enhance the security of the software update transmission, the storage of the software update, and the application of the software update.

### Example Components

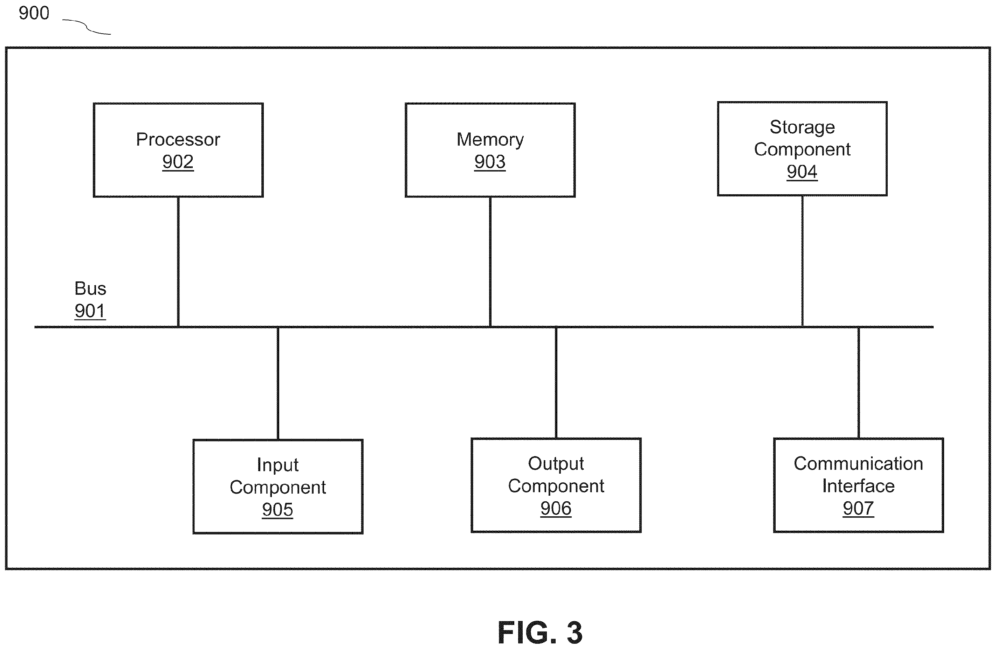

FIG. 3 illustrates a diagram of example components of a device 900, according to one or more example embodiments. In some example embodiments, the device 900 may be an in-vehicle device that implements the vehicle system 100 (or one or more operations associated therewith). Additionally, the device 900 may also be an equipment, such as a server, that implements the source 200 (or one or more operations associated therewith).

As illustrated in FIG. 3, the device 900 may include at least one bus 901, at least one processor 902, at least one memory 903, at least one storage component 904, at least one input component 905, at least one output component 906, and at least one communication interface 907.

It is contemplated that the device 900 may include more or fewer components than illustrated in FIG. 3, without departing from the scope of the present disclosure. For instance, in some embodiments, the device 900 may include a plurality of storage components 904, the input component 905 and the output component 906 may be implemented as a transceiver component, the memory 903 and storage component 904 may be implemented as a memory storage, and the like.

The bus 901 may be configured to facilitate or enable communications among the components of the device 900. Specifically, the bus 901 may communicatively couple the components to each other and provide a means for data transfer and flow of control signals between the components. The bus 901 may include one or more of: an internal bus, an address bus, a data bus, a control bus, a controller area network (CAN) bus, an Ethernet bus, a peripheral component interconnect express (PCIe) bus, and any other suitable type of bus that can be implemented in the device 900 to enable communication and coordination between the components within the device 900 in real-time (or near real-time).

The processor 902 may be implemented in hardware, firmware, or a combination of hardware and software, and may be configured to handle real-time (or near real-time) data processing and control of the control device 900. The processor 902 may include one or more of: a central processing unit (CPU), a graphics processing unit (GPU), a neural processing unit (NPU), a tensor processing unit (TPU), an accelerated processing unit (APU), a microprocessor, a microcontroller, a digital signal processor (DSP), a field-programmable gate array (FPGA), an application-specific integrated circuit (ASIC), and/or another type of processing or computing component that can be implemented in the device 900. In some implementations, the processor 902 may be capable of being programmed to perform one or more operations described herein. Further, the processor 902 may include a plurality of processing units, each of which is dedicated to performing a specific operation.

The memory 903 may include one or more mediums for storing temporary data, runtime variables, program instructions, and buffers required for the operations of the control device 900. The memory 903 may include one or more of: a flash memory, a read-only memory (ROM), a random-access memory (RAM), a dynamic or static storage device (e.g., a flash memory, a magnetic memory, and/or an optical memory), any other suitable type of memory that can be implemented in the device 900 to store information and/or instructions for use by the processor 902.

The storage component 904 may be configured to store non-volatile data, such as firmware, configuration settings, calibration data, information, and/or software related to the operation and use of the device 900. For example, the storage component 904 may include a hard disk (e.g., a magnetic disk, an optical disk, a magneto-optic disk, and/or a solid state disk), a compact disc (CD), a digital versatile disc (DVD), a floppy disk, a cartridge, a magnetic tape, and/or another type of non-transitory computer-readable medium, along with a corresponding drive.

According to embodiments, the storage component 904 may be configured to store computer-readable or computer-executable instructions for implementing one or more operations of the device 900. The storage component 904 may provide the stored information to the memory 903 for the execution of the processor 902.

The input component 905 may include one or more input components that permit the device 900 to receive information, such as via user input (e.g., a touch screen display, a keyboard, a keypad, a mouse, a button, a switch, and/or a microphone). The output component 906 may include one or more output components that provide output information from the device 900 (e.g., a display, a speaker, a navigation device, one or more light-emitting diodes (LEDs), etc.). According to embodiments, the input component 905 and/or the output component 906 may be optional and may be excluded from the device 900. According to example embodiments, the input component 905 and/or the output component 906 may be optional.

The at least one communication interface 907 may include a transceiver-like component (e.g., a transceiver and/or a separate receiver and transmitter) that enables the device 900 to communicate with other components (e.g., ECUs, user devices, etc.), such as via a wired connection, a wireless connection, or a combination of wired and wireless connections. For example, communication interface 907 may include a controller area network (CAN) bus interface, an Ethernet interface, an optical interface, a coaxial interface, an infrared interface, a radio frequency (RF) interface, a universal serial bus (USB) interface, a Wi-Fi interface, a cellular network interface, or the like.

According to one or more embodiments, the communication interface 907 may include at least one input/output (I/O) interface, at least one network interface, at least one storage interface, or the like, that enable the components 902-906 to communicate with other components. Further, the communication interface 907 may include one or more application programming interfaces (APIs) that allow the device 900 (or one or more components included therein) to communicate with one or more software applications (e.g., software application deployed in the ECUs, etc.).

Computer-executable instructions (e.g., software instructions, etc.) may be read into memory 903 and/or storage component 904 from another computer-readable medium or from another device (e.g., a remote server, an external storage, etc.) via, for example, the communication interface 907. When executed, the computer-executable instructions stored in memory 903 and/or storage component 904 may cause the processor 902 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

### Various Aspects of Embodiments

It is contemplated that features, advantages, and significances of example embodiments described hereinabove with reference to FIG. 1 to FIG. 3 are merely a portion of the present disclosure, and are not intended to be exhaustive or to limit the scope of the present disclosure. Further descriptions of the features, components, configuration, operations, and implementations of example embodiments of the present disclosure, as well as the associated technical advantages and significances, are provided in the following.

It is understood that the specific order or hierarchy of blocks in the processes/ flowcharts disclosed herein is an illustration of example approaches. Based upon design preferences, it is understood that the specific order or hierarchy of blocks in the processes/ flowcharts may be rearranged. Further, some blocks may be combined or omitted. The accompanying method claims present elements of the various blocks in a sample order, and are not meant to be limited to the specific order or hierarchy presented.

Some embodiments may relate to a system, a method, and/or a computer-readable medium at any possible technical detail level of integration. Further, as described hereinabove, one or more of the above components described above may be implemented as instructions stored on a computer readable medium and executable by at least one processor (and/or may include at least one processor ). The computer-readable medium may include a computer-readable non-transitory storage medium (or media) having computer-readable program instructions thereon for causing a processor (or processors) to carry out operations.

The computer readable storage medium can be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program code/instructions for carrying out operations may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object-oriented programming languages such as Smalltalk, C++, or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects or operations.

These computer readable program instructions may be provided to a processor of a SoC, a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or another device to cause a series of operational steps to be performed on the computer, other programmable apparatus or other device to produce a computer-implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer-readable media according to various embodiments. In this regard, each block in the flowchart or block diagrams may represent a module, segment, or portion of instructions, which comprises one or more executable instructions for implementing the specified logical function(s). The method, computer system, and computer-readable medium may include additional blocks, fewer blocks, different blocks, or differently arranged blocks than those depicted in the Figures. In some alternative implementations, the functions noted in the blocks may occur out of the order noted in the Figures. For example, two blocks shown in succession may, in fact, be executed concurrently or substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code-it being understood that software and hardware may be designed to implement the systems and/or methods based on the description herein.

## Claims

1. A method for updating a software in a vehicle system, wherein the method comprises:
communicating, by a processor and with a source external to the vehicle system, information associated with a software update to an operating system (OS) of the vehicle system;
obtaining, by the processor and from the source, a portion of the software update; and
applying, by the processor, the obtained portion of the software update to a partition of the OS,
wherein the partition of the OS comprises at least one of: a first partition that manages a first type of data and a second partition that manages a second type of data;
wherein the first type of data comprises at least one of: non-malleable data, infrequently changing data, and safety-critical data;
wherein the second type of data comprises at least one of: malleable data, frequently changing data, and non-safety-critical data; and
wherein the first partition and the second partition are logical partitions that are enforced by a configuration of the OS.

2. The method according to claim 1, wherein the obtaining the portion of the software update comprises:
determining, by the processor, which of the first partition and the second partition requires the software update;
based on determining that the first partition requires the software update, outputting, by the processor and to the source, a request for a portion of the software update that associates with the first type of data;
based on determining that the second partition requires the software update, outputting, by the processor and to the source, a request for a portion of the software update that associates with the second type of data; and
obtaining, by the processor and from the source, the requested portion of the software update.

3. The method according to claim 1 or 2, wherein the communicating the information associated with the software update comprises:
receiving, by the processor and from the source, a beacon indicating that the software update is available;
determining, by the processor, whether the software update is associated with the OS;
based on determining that the software update is associated with the OS, initiating, by the processor, a handshake session with the source; and
based on determining that the handshake session is successfully initiated, obtaining, by the processor and from the source, information associated with the software update.

4. The method according to any one of claims 1 to 3, wherein the communicating the information associated with the software update comprises:
determining, by the processor, whether a triggering condition for querying a software update is satisfied;
based on determining that the triggering condition is satisfied, initiating, by the processor, a handshake session with the source; and
based on determining that the handshake session is successfully initiated, obtaining, by the processor and from the source, information associated with the software update.

5. The method according to claim 3 or 4, wherein the initiating the handshake session comprises:
performing, by the processor, a mutual authentication with the source; and
based on determining that the mutual authentication is successful, performing, by the processor, a cryptographic verification on the source.

6. The method according to claim 4, wherein the triggering condition comprises at least one of: a time-based condition, an event-based condition, and a system-health-based condition.

7. The method according to any one of claims 1 to 6, further comprising:
verifying, by the processor and based on a public key of the source, an authenticity of the obtained portion of software update.

8. The method according to claim 7, further comprising:
based on verifying that the obtained portion of software update is authentic, storing, by the processor, the obtained portion of software update in a cache for at least a predetermined amount of time.

9. The method according to claim 7 or 8, wherein the applying the obtained portion of the software update comprises:
based on verifying that the obtained portion of software update is authentic, setting, by the processor, a timing for applying the portion of software update;
based on determining that the set timing has elapsed, applying, by the processor, the obtained portion of the software update to the partition of the OS.

10. The method according to any one of claim 7 to 9, wherein the applying the obtained portion of the software update comprises:
based on verifying that the obtained portion of software update is authentic, outputting, by the processor, a notification regarding the software update;
receiving, by the processor, a user approval for applying the software update; and
applying, by the processor, the obtained portion of the software update to the partition of the OS.

11. The method according to any one of claims 1 to 10, wherein the applying the obtained portion of the software update comprises:
determining, by the processor, whether the vehicle system has sufficient resources to apply the obtained portion of the software update in background while the vehicle system is operational;
based on determining that the vehicle system has sufficient resources to apply the obtained portion of the software update in background, applying the obtained portion of the software update to the partition of the OS while the vehicle system is operational.

12. A device for updating a software in a vehicle system, the device comprising:
a memory storage storing computer-executable instructions; and
a processor communicatively coupled to the memory storage, wherein the processor is configured to execute the instructions to:
communicate, with a source external to the vehicle system, information associated with a software update to an operating system (OS) of the vehicle system;
obtain, from the source, a portion of the software update; and
apply the obtained portion of the software update to a partition of the OS,
wherein the partition of the OS comprises at least one of: a first partition that manages a first type of data and a second partition that manages a second type of data;
wherein the first type of data comprises at least one of: non-malleable data, infrequently changing data, and safety-critical data;
wherein the second type of data comprises at least one of: malleable data, frequently changing data, and non-safety-critical data; and
wherein the first partition and the second partition are logical partitions that are enforced by a configuration of the OS.

13. The device according to claim 12, wherein the processor is configured to obtain the portion of the software update by:
determining which of the first partition and the second partition requires the software update;
based on determining that the first partition requires the software update, outputting, to the source, a request for a portion of the software update that associates with the first type of data;
based on determining that the second partition requires the software update, outputting, to the source, a request for a portion of the software update that associates with the second type of data; and
obtaining, by the processor and from the source, the requested portion of the software update.

14. The device according to claim 12 or 13, wherein the processor is configured to communicate the information associated with the software update by:
receiving, from the source, a beacon indicating that the software update is available;
determining whether the software update is associated with the OS;
based on determining that the software update is associated with the OS, initiating a handshake session with the source; and
based on determining that the handshake session is successfully initiated, obtaining, from the source, information associated with the software update.

15. A computer program to cause a processor to perform a method to update a software in a vehicle system, the method comprising:
communicating, by the processor and with a source external to the vehicle system, information associated with a software update to an operating system (OS) of the vehicle system;
obtaining, by the processor and from the source, a portion of the software update; and
applying, by the processor, the obtained portion of the software update to a partition of the OS,
wherein the partition of the OS comprises at least one of: a first partition that manages a first type of data and a second partition that manages a second type of data;
wherein the first type of data comprises at least one of: non-malleable data, infrequently changing data, and safety-critical data;
wherein the second type of data comprises at least one of: malleable data, frequently changing data, and non-safety-critical data; and
wherein the first partition and the second partition are logical partitions that are enforced by a configuration of the OS.
